# FASCICULE DE BREVET EUROPEEN

(11) **EP 3 215 386 B1**
(45) Date de publication et mention de la délivrance du brevet: **15.08.2018**
(21) Numéro de dépôt: 15791687.5
(22) Date de dépôt: 06.10.2015
(51) Int. Cl.: B60K 17/06, B60K 17/10, B60K 17/08, B60K 6/12, B60K 15/07

(54) **TRANSMISSION MÉCANIQUE DE VÉHICULE AUTOMOBILE AVEC MACHINE HYDRAULIQUE**
MECHANISCHES GETRIEBE EINES KRAFTFAHRZEUGS MIT HYDRAULISCHER MASCHINE
MECHANICAL GEARBOX OF A MOTOR VEHICLE WITH HYDRAULIC MACHINE

(30) Priorité: 04.11.2014 FR 1460613
(43) Date de publication de la demande: 13.09.2017
(73) Titulaire: Technoboost, 75116 Paris (FR)
(72) Inventeur: GIANNONI, Marc, F-75009 Paris (FR); BARBOSA PEREIRA, Victor, F-95160 Montmorency (FR)
(74) Mandataire: Rosenberg, Muriel Sylvie
(86) Numéro de dépôt international: PCT/FR2015/052677
(87) Numéro de publication internationale: WO 2016/071594

(56) Documents cités:
- FR-A1- 2 645 932
- FR-A1- 3 001 662
- US-A1- 2011 031 053
- US-A1- 2012 270 690

## Description

L'invention a trait au domaine des véhicules automobiles. Plus particulièrement l'invention a trait au domaine de la transmission mécanique de véhicules automobiles comprenant une machine hydraulique.

Il est connu d'utiliser des machines hydrauliques dans le domaine industriel pour générer des mouvements linéaires par exemple au moyen de vérins. Dans cette application la machine hydraulique fonctionne telle une pompe et produit un flux d'huile à haute pression générant le mouvement. Il est également connu d'utiliser des machines hydrauliques pour générer des mouvements en rotation, par exemple au moyen de moteurs hydrauliques. Dans une telle application, une première machine hydraulique fonctionne en tant que pompe et une deuxième machine hydraulique fonctionne en tant que moteur. Ces fonctions peuvent par ailleurs être inversées. Ce type de transmission peut être mis en oeuvre sur des véhicules automobiles, notamment hybrides, en vue de convertir de l'énergie mécanique stockée en travail de transmission et inversement. Ces machines peuvent être montées en porte-à-faux sur un carter de boîte de vitesses. Dans les deux sens de fonctionnement, les machines hydrauliques peuvent générer des vibrations dues notamment à un fonctionnement généralement acyclique. Les variations de pression d'huile dans les conduites et dans les machines elles-mêmes sont d'autres sources de vibrations. De telles vibrations nuisent généralement à la tenue des composants de la machine ou des composants environnant en raison des contraintes mécaniques dynamiques qu'elles génèrent. Ces vibrations augmentent par ailleurs le bruit par rayonnement, ce bruit pouvant être pénalisant notamment dans des applications sur des véhicules automobiles.

Une transmission mécanique selon le préambule de la revendication 1 est connue du document US 2011/031053 A1.

L'invention a pour objectif de proposer une solution pour pallier au moins un des inconvénients de l'état de la technique ci-dessus mentionnés. Plus particulièrement, l'invention a pour objectif de proposer une transmission mécanique hybride hydraulique fiable pour véhicule automobile.

L'invention a pour objet une transmission mécanique pour véhicule automobile, comprenant : une boîte de vitesses avec un carter et au moins deux arbres de transmission ; au moins une machine hydraulique, du type pompe ou moteur hydraulique, montée sur le carter et avec un arbre couplé à un des arbres de transmission de la boîte de vitesses ; remarquable en ce qu'au moins un quart, préférentiellement au moins un tiers, de l'étendue axiale de la ou d'au moins une des machines hydrauliques est logé dans une cavité du carter de la boîte de vitesses. Les arbres de transmission sont destinés à transmettre un couple moteur aux roues via la boîte de vitesse ; ils sont également des arbres de commande en vue de la transmission d'un couple moteur aux machines hydrauliques.

Selon un mode avantageux de l'invention, la ou chacune des machines hydrauliques logées dans une cavité du carter comprend une ou plusieurs surfaces de montage sur ledit carter, ladite ou lesdites surfaces venant en contact avec une ou des surfaces extérieures du carter en dehors de la cavité.

Selon un mode avantageux de l'invention, le carter comprend plusieurs surfaces extérieures aptes à recevoir la ou les surfaces de montage, lesdites surfaces extérieures formant des pieds situés en périphérie de la cavité et s'étendant axialement dans un sens opposé à la cavité.

Selon un mode avantageux de l'invention, la ou les surfaces de montage de la ou de chacune des machines hydrauliques logées dans une cavité du carter sont situées axialement sur une portion centrale de ladite machine, ladite portion s'étendant sur moins d'un quart de l'étendue axiale de ladite machine.

Avantageusement, la portion centrale de la ou de chacune des machines hydrauliques sur laquelle sont situées les surfaces de montage est liée à la position du centre de gravité de la machine hydraulique.

Selon un mode avantageux de l'invention, la ou les machines hydrauliques comprennent un boîtier métallique et plusieurs brides venues de matière avec le boîtier, préférentiellement par moulage ou forgeage, lesdites brides formant les surfaces de montage sur le carter.

Selon un mode avantageux de l'invention, la transmission mécanique comprend un dispositif d'ajustement entre une des surfaces de montage de la ou de chacune des machines hydrauliques et la surface correspondante sur le carter.

Avantageusement, le dispositif d'ajustement est configuré pour réaliser un ajustement axial et/ou en orientation.

Selon un mode avantageux de l'invention, le dispositif d'ajustement comprend une vis d'ancrage de la machine hydraulique, et un dispositif de butée réglant axialement l'ancrage de ladite machine.

Selon un mode avantageux de l'invention, la transmission mécanique comprend, en outre, au moins un manchon avec deux extrémités cannelées couplant l'arbre du ou d'au moins une des machines hydrauliques à l'arbre correspondant de la boîte de vitesses, les cannelures présentant préférentiellement un profil longitudinal bombé de manière à permettre un désalignement entre le manchon et un des arbres correspondant.

Selon un mode avantageux de l'invention, le ou au moins un des manchons comprend un dispositif exerçant un effort axial élastique entre le manchon et un des arbres auxquels le manchon est couplé, ledit effort assurant un maintien axial du manchon.

Selon un mode avantageux de l'invention, le dispositif exerçant un effort axial élastique comprend un poussoir et un ressort logés dans une portion centrale du manchon, le poussoir prenant appui sur un des deux arbres auxquels le manchon est couplé.

Selon un mode avantageux de l'invention, la transmission mécanique comprend au moins deux machines hydrauliques s'étendant essentiellement parallèlement l'une à l'autre, et un bloc hydraulique fixé aux deux machines, ladite fixation assurant des connexions hydrauliques avec lesdites machines.

Avantageusement, la fixation du bloc hydraulique aux machines hydrauliques assure un maintien rigide des machines entre-elles.

Selon un mode avantageux de l'invention, le bloc hydraulique intègre les éléments aptes à assurer le bon fonctionnement de la transmission hydraulique, lesdits éléments étant parmi : électrovanne(s) de commande, régulateur(s) de pression, bloc échangeur / filtre, cavités ou volumes morts hydrauliques pour absorber les variations de pression, capteur(s) de pression, capteur(s) de température.

Selon un mode avantageux de l'invention, les connections hydrauliques sont étanches au moyen de joints, préférentiellement des joints toriques, à section carrée et/ou rectangulaire.

Selon un mode avantageux de l'invention, les connections hydrauliques comprennent, pour chacune des machines hydrauliques au moins une connexion à haute pression, au moins une connexion à basse pression, et une barrière d'étanchéité auxiliaire entourant la ou lesdites connexions à haute pression, ladite barrière d'étanchéité étant configurée pour canaliser une fuite éventuelle de la ou d'une des connexions à haute pression vers un drain basse pression.

L'invention a également pour objet un véhicule automobile comprenant : un moteur à combustion ; une transmission mécanique couplée audit moteur ; un accumulateur de pression ; remarquable en ce que la transmission mécanique est conforme à l'invention, la ou les machines hydrauliques étant reliées hydrauliquement à l'accumulateur de pression.

Avantageusement, l'accumulateur de pression comprend un gaz, préférentiellement de l'azote, apte à être comprimé à une pression de plus de 200Bar, préférentiellement de plus de 350Bar, par le liquide hydraulique provenant d'au moins une des machines hydrauliques.

Le véhicule comprend, en outre, un réservoir de liquide hydraulique à basse pression, le bloc hydraulique étant hydrauliquement connecté audit réservoir.

Selon un mode avantageux de l'invention, l'accumulateur de pression comprend un volume de gaz, préférentiellement de l'azote, ledit volume étant logé à l'extrémité de l'accumulateur et séparé du liquide hydraulique par un piston ou une vessie élastique en matériau organique ou métallique.

Les mesures de l'invention sont intéressantes en ce que la transmission mécanique de véhicule automobile comprenant une ou des machines hydrauliques est fiabilisée. En effet, le montage des machines hydrauliques dans les cavités du carter de boîte de vitesses réduit la longueur en porte-à-faux des machines à l'extérieur de la boite de vitesses, la réalisation plus compacte de la transmission réduit l'amplitude des vibrations et par conséquent les contraintes sur les composants ainsi que l'usure qui en est associée. En outre, le découplage de transmission par manchon d'un ou des arbres de transmission réduit la propagation de bruit. Enfin, l'élimination des conduites d'huile au strict minimum entrée basse pression et sortie haute pression du bloc hydraulique rigidifie l'ensemble de la transmission et la rend plus robuste.

D'autres caractéristiques et avantages de la présente invention seront mieux compris à l'aide de la description et des dessins parmi lesquels :
- La figure 1 est une vue simplifiée d'un véhicule automobile comprenant une transmission mécanique conforme à l'invention ;
- La figure 2 est une vue schématique de la transmission mécanique de la figure 1 ;
- La figure 3 est une vue en perspective d'un mode particulier de réalisation de la transmission mécanique des figures 1 et 2 ;
- La figure 4 est une vue en perspective d'une machine hydraulique de la transmission mécanique de la figure 3 ;
- La figure 5 est une vue en coupe axiale V-V d'un dispositif d'ajustement de la fixation entre la machine hydraulique et le carter de boîte de vitesses de la transmission mécanique de la figure 3 ;
- La figure 6 est une vue en coupe axiale VI-VI d'un mode d'accouplement mécanique entre la machine hydraulique et la boîte de vitesses de la transmission mécanique de la figure 3 ;
- La figure 7 est une vue en coupe transversale VII - VII au niveau de la fixation du bloc hydraulique aux machines hydrauliques de la transmission mécanique de la figure 3 ;

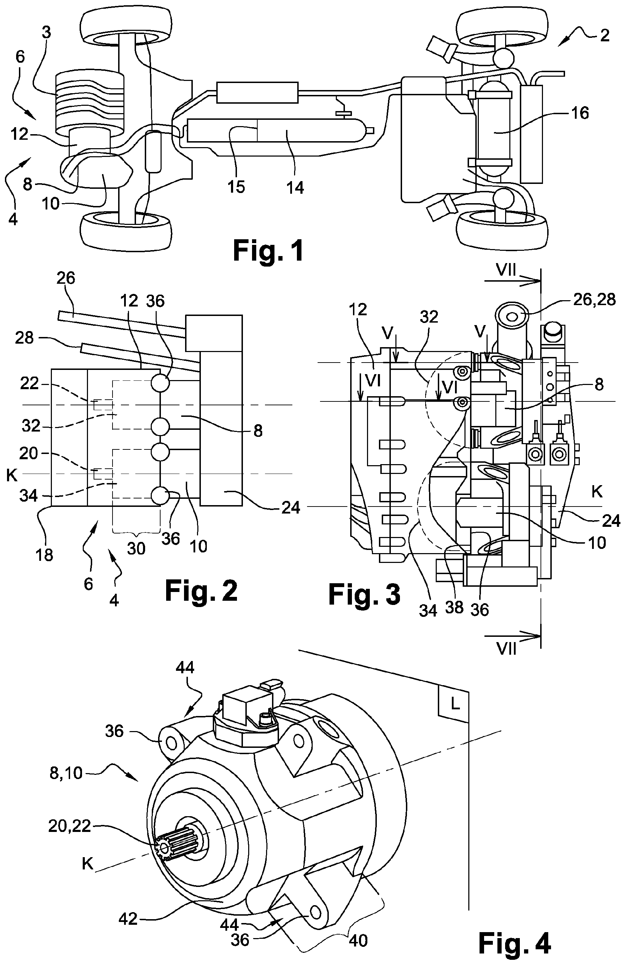

La figure 1 est une vue simplifiée d'un véhicule automobile 2 comprenant une transmission mécanique 4 conforme à l'invention. Le véhicule automobile 2 comprend un moteur thermique 3 avec une transmission mécanique aux roues couplée au moteur thermique et réalisée via un couplage (type embrayage avec ou sans possibilité de glissement), une boîte de vitesses 6 et un différentiel. La transmission mécanique 4 comprend en outre, au moins deux machines hydrauliques 8 et 10, du type pompe ou moteur, montées au carter 12 de la boîte de vitesses 6, chacune des machines hydrauliques 8 et 10 étant couplée à un arbre de transmission correspondant de la boîte de vitesses 6. Les arbres de transmission sont destinés à transmettre un couple moteur aux roues via la boîte de vitesse ; ils sont également des arbres de commande en vue de la transmission d'un couple moteur aux machines hydrauliques. On peut observer que le véhicule 2 comprend, en outre, un accumulateur de pression 14 situé au niveau du plancher du véhicule ainsi qu'un réservoir 16 de liquide hydraulique, en l'occurrence de l'huile, situé au niveau du coffre du véhicule. Le véhicule 2 est réalisé de telle manière qu'une des machines hydrauliques 8 et 10 peut fonctionner en tant que pompe, et l'arbre de cette pompe être apte à absorber de l'énergie cinétique du véhicule 2, par exemple en cours de freinage, la pompe transformant cette énergie cinétique en un volume de gaz sous pression stocké dans l'accumulateur 14 ; l'augmentation de la pression du volume de gaz provient du flux d'huile généré par la pompe. Le gaz peut être de l'azote, il est stocké au fond de l'accumulateur de pression et est séparé de l'huile sortant de la pompe par un piston ou une vessie élastique en matériau organique ou métallique 15. L'azote peut être comprimé jusqu'à une pression de plus de 200bar, préférentiellement de plus de 350bar. La machine hydraulique 8 ou 10 peut également fonctionner en tant que moteur, l'azote sous pression de l'accumulateur 14 pouvant se détendre et générer via le mouvement du piston ou de la vessie élastique en matériau organique ou métallique 15 un flux d'huile dans le moteur hydraulique, celui-ci transformant l'énergie du flux d'huile en une énergie motrice de l'arbre moteur transmise aux roues via la boîte de vitesses. Le véhicule 2 comprend donc un moyen de propulsion supplémentaire au moteur thermique 3.

La figure 2 est une vue schématique de la transmission mécanique 4 conforme à l'invention et comme vue en relation avec la figure précédente. On peut voir sur la gauche de l'image le carter d'embrayage 18 de la transmission 4 vers le moteur thermique (non représenté) ; le carter 12 de la boîte de vitesses 6 est assemblé au carter d'embrayage 18. Puis sont représentées les deux machines hydrauliques 8 et 10, du type pompe ou moteur hydraulique, montées sur le carter 12 de la boîte de vitesses 6 à l'opposé du carter d'embrayage 18. On peut observer les deux arbres de transmission 20 et 22 (représentés en pointillés) des machines hydrauliques 8 et 10 vers deux arbres correspondants (non représentés) de la boîte de vitesses 6. La transmission mécanique 4 comporte également un bloc hydraulique 24 représenté schématiquement à droite de l'image. Le bloc 24 a pour fonction la rigidification de l'ensemble par bouclage mécanique - carter boîte de vitesses 12 / machines hydrauliques 8 et 10 / bloc hydraulique 24 - et la distribution de l'huile de fonctionnement des machines 8 et 10. Les conduites d'huile à haute pression 26 et à basse pression 28 sont connectées au bloc hydraulique 24 en provenance, respectivement, de l'accumulateur de pression (non représenté) et du réservoir d'huile (non représenté). Une portion axiale 30 de chacune des machines hydrauliques 8 et 10, préférentiellement au moins un quart, plus préférentiellement encore au moins un tiers, de l'étendue axiale des machines hydrauliques 8 et 10 est logée dans une cavité 32 et 34 du carter 12 de la boîte de vitesses 6. Les machines hydrauliques 8 et 10 comprennent des surfaces de montage 36 sur ledit carter 12, ces surfaces viennent en contact avec des surfaces extérieures du carter en dehors des cavités 32 et 34. Ces surfaces de montage 36 sont représentées schématiquement par des cercles sur l'image.

Les figures 3 et 4 sont des vues en perspective d'un mode particulier de réalisation de la transmission mécanique 4 conforme à l'invention. La figure 4 ne présente cependant que la machine hydraulique 8 ou 10.

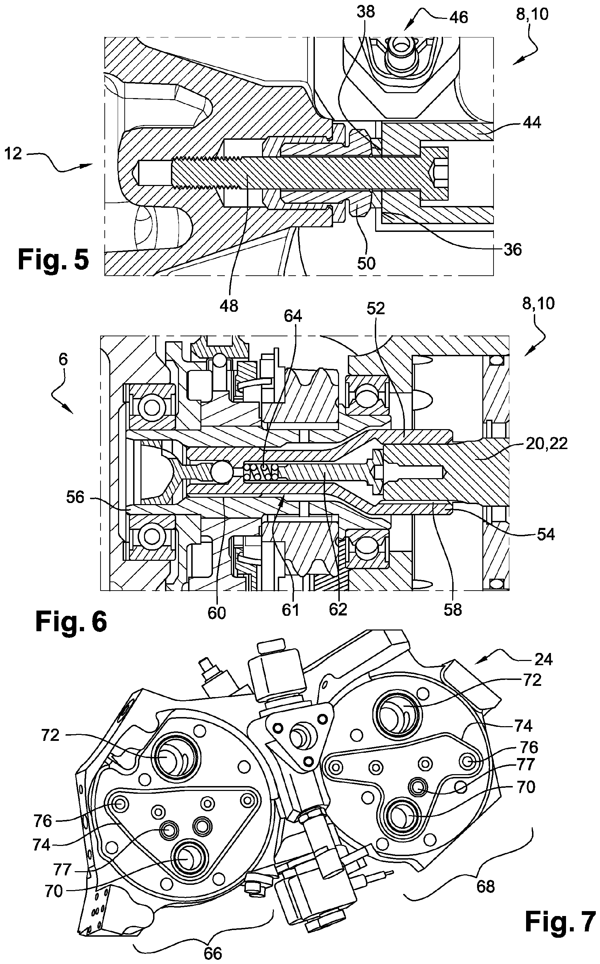

La figure 3 est une vue d'un mode de réalisation particulier de la transmission mécanique 4 conforme à l'invention. On peut voir le carter 12 de la boîte de vitesses, les machines hydrauliques 8 et 10 fixées au carter 12, le bloc hydraulique 24 fixé aux machines hydrauliques et enfin en arrière-plan les conduites hydrauliques 26 et 28 destinées à être connectées respectivement à l'accumulateur de pression (non représenté) et au réservoir (non représenté). Les cavités 32 et 34 dans lesquelles sont logées les machines hydrauliques 8 et 10 sont représentées en pointillés au niveau du carter 12 de la boîte de vitesses. On peut voir en particulier au niveau de la fixation entre les machines hydrauliques 8 et 10 et le carter 12 de boîte de vitesses, qu'elle peut être réalisée par plusieurs surfaces extérieures 38 du carter 12 aptes à recevoir les surfaces de montage 36 des machines hydrauliques. Les surfaces extérieures 38 forment des pieds situés en périphérie des cavités 32 et 34 et qui s'étendent axialement dans un sens opposé aux cavités. Par ailleurs, les deux machines hydrauliques 8 et 10 s'étendent parallèlement l'une à l'autre, le bloc hydraulique 24 étant fixé par l'arrière aux deux machines en opposition avec les arbres. En particulier, la fixation du bloc hydraulique 24 aux machines 8 et 10 assure une liaison rigide entre les machines 8 et 10 ainsi que les connexions hydrauliques entre le bloc et les machines. Des détails au sujet de la connexion sont présentés en relation avec la figure 7.

La figure 4 est une vue d'une machine hydraulique 8 ou 10 conforme à l'invention et dans le mode particulier de réalisation présenté en relation avec la figure 3. On peut voir les surfaces de montage 36 situées axialement sur une portion centrale 40 de la machine hydraulique 8 ou 10. Les surfaces de montage 36 peuvent être situées dans un plan moyen « L » perpendiculaire à l'axe « K » de la machine, le plan moyen « L » étant favorablement situé à la position axiale du centre de gravité de la machine. Cette mesure est intéressante en ce que grâce à la position centrale des surfaces de fixation 36, les efforts provenant des vibrations de la machine hydraulique 8 ou 10 transmettent au carter de la boite de vitesses des moments d'effort réduits. La portion centrale 40 peut s'étendre sur moins d'un quart de l'étendue axiale de la machine hydraulique. La machine hydraulique 8 ou 10 comprend un boîtier (ou carter) métallique 42 dans lequel sont réalisées plusieurs brides 44 venues de matière avec le boîtier 42, préférentiellement par forgeage ou par moulage, ces brides 44 formant les surfaces de montage 36 de la machine hydraulique sur le carter de boîte de vitesses. Cette mesure est avantageuse en ce que les brides de fixation et le boîtier (ou carter) sont d'un seul tenant ce qui élimine les vibrations qu'engendreraient des moyens de fixation intermédiaires.

Les figures 5 à 7 sont des vues en coupe de diverses parties de la transmission mécanique conforme à l'invention et dans le mode de réalisation particulier introduit en relation avec la figure 3.

La figure 5 est une vue en coupe axiale V-V d'un dispositif d'ajustement 46 de la fixation entre la bride de montage 44 de la machine hydraulique 8 ou 10 et le carter 12 de boîte de vitesses. Le dispositif d'ajustement 46 comprend une vis d'ancrage 48 de la machine hydraulique dans le carter 12, et un dispositif de butée 50 réglant axialement la positon de l'ancrage de la machine hydraulique 8 ou 10. Ce dispositif d'ajustement axial est combiné avec un ajustement en orientation des plans de fixation par un système de surface concave/convexe représenté par les surfaces 36 et 38.

La figure 6 est une vue en coupe axiale VI-VI d'un mode d'accouplement mécanique entre la machine hydraulique 8 ou 10 et la boîte de vitesses 6. Plus précisément, l'accouplement est réalisé entre un arbre 20 ou 22 de la machine hydraulique et un manchon intermédiaire 52 comprenant deux extrémités 54 et 56, la seconde extrémité 56 étant couplée à un arbre correspondant de la boîte de vitesses 6. Cette mesure est intéressante pour découpler la transmission mécanique et réduire la propagation acoustique des vibrations. Les deux extrémités 54 et 56 du manchon 52 sont cannelées, les cannelures 58 et 60 aux deux extrémités présentant un profil longitudinal bombé de manière à permettre un léger désalignement entre le manchon 52 et l'arbre 20 ou 22 correspondants. Par ailleurs, le manchon 52 comprend un dispositif 61 exerçant un effort axial élastique entre le manchon 52 et l'arbre 20 ou 22 auquel le manchon est accouplé, cet effort permettant d'assurer un maintien axial du manchon et ainsi éviter tout choc mécanique générateur de bruit lors du fonctionnement. Ce dispositif exerçant un effort axial élastique comprend, dans le mode de réalisation présenté, un poussoir 62 et un ressort 64 logés dans une portion centrale du manchon 52, le poussoir 62 prenant appui sur l'arbre 20 ou 22 auquel le manchon 52 est accouplé. Cette mesure est intéressante pour éviter le jeu axial dans la transmission entre le manchon 52 et l'arbre 20 ou 22 et améliorer l'acoustique.

La figure 7 est une vue en coupe transversale VII - VII au niveau de la fixation du bloc hydraulique 24 de distribution d'huile aux machines hydrauliques (non représentées). On peut observer deux groupes de connexions hydrauliques 66 et 68 pour les deux machines hydrauliques. Pour chacun des groupes de connexions, le bloc hydraulique 24 comprend des connexions principales « haute pression » 70 et « basse pression » 72 ainsi que des connexions secondaires « haute pression » et « basse pression ». Les connexions « haute pression » sont couramment appelées de telle manière car elles sont en lien avec l'accumulateur de pression, les connexions « basse pression » sont couramment appelées de telle manière car elles sont en lien avec le réservoir hydraulique. Le bloc hydraulique 24 comprend également au niveau des groupes de connexions 66 ou 68 avec chacune des machines hydrauliques, une barrière d'étanchéité auxiliaire 74 entourant les connexions haute pression correspondantes. La barrière d'étanchéité 74 est configurée pour canaliser une fuite éventuelle de la ou d'une des connexions à haute pression 70 vers un ou plusieurs drains basse pression 77. Les connexions hydrauliques hautes pression 70 comprennent en outre une ou plusieurs connexions haute pression 76 de plus faible section pour la commande de cylindrée et l'amortissement de chocs hydrauliques. Cette mesure est intéressante dans le cas de transmissions mécaniques réalisées avec des machines hydrauliques à barillets, en vue de fiabiliser les connexions hydrauliques. Les barrières d'étanchéité auxiliaires 74 ainsi que chacune des connexions haute 70 et 76 ou basse pression 72 sont rendues étanches au moyen de joints, préférentiellement des joints toriques, à section carrée et/ou rectangulaire.

## Revendications

1. Transmission mécanique (4) pour véhicule automobile (2), comprenant :
- une boîte de vitesses (6) avec un carter (12) et au moins deux arbres de transmission (20, 22) ;
- au moins une machine hydraulique (8, 10), du type pompe ou moteur hydraulique, montée sur le carter (12) et avec un arbre (20, 22) couplé à un des arbres de transmission de la boîte de vitesses ;
**caractérisée en ce que**
au moins un quart, préférentiellement au moins un tiers, de l'étendue axiale de la ou d'au moins une des machines hydrauliques (8, 10) est logé dans une cavité (32, 34) du carter (12) de la boîte de vitesses.

2. Transmission mécanique (4) selon la revendication 1, **caractérisée en ce que** la ou chacune des machines hydrauliques (8, 10) logées dans une cavité (32, 34) du carter (12) comprend une ou plusieurs surfaces de montage (36) sur ledit carter, ladite ou lesdites surfaces venant en contact avec une ou des surfaces extérieures (38) du carter en dehors de la cavité.

3. Transmission mécanique (4) selon la revendication 2, **caractérisée en ce que** la ou les surfaces de montage (36) de la ou de chacune des machines hydrauliques (8, 10) logées dans une cavité du carter sont situées axialement sur une portion centrale (40) de ladite machine, ladite portion s'étendant sur moins d'un quart de l'étendue axiale de ladite machine (8, 10).

4. Transmission mécanique (4) selon l'une des revendications 2 et 3, **caractérisée en ce qu'**elle comprend un dispositif d'ajustement (46) entre une des surfaces de montage (36) de la ou de chacune des machines hydrauliques (8, 10) et la surface correspondante (38) sur le carter (12).

5. Transmission mécanique (4) selon l'une des revendications 1 à 4, **caractérisée en ce qu'**elle comprend, en outre, au moins un manchon (52) avec deux extrémités cannelées (54 ; 56) couplant l'arbre (20, 22) du ou d'au moins une des machines hydrauliques à l'arbre correspondant de la boîte de vitesses, les cannelures (58) présentant préférentiellement un profil longitudinal bombé de manière à permettre un désalignement entre le manchon (52) et un des arbres (20, 22) correspondant.

6. Transmission mécanique (4) selon la revendication 5, **caractérisée en ce que** le ou au moins un des manchons (52) comprend un dispositif (61) exerçant un effort axial élastique entre le manchon (52) et un des arbres (20, 22) auxquels le manchon est couplé, ledit effort assurant un maintien axial du manchon (52).

7. Transmission mécanique (4) selon la revendication 6, **caractérisée en ce que** le dispositif (61) exerçant un effort axial élastique comprend un poussoir (62) et un ressort (64) logés dans une portion centrale du manchon, le poussoir prenant appui sur un des deux arbres (20, 22) auxquels le manchon (52) est couplé.

8. Transmission mécanique (4) selon l'une des revendications 1 à 7, **caractérisé en ce qu'**elle comprend au moins deux machines hydrauliques (8, 10) s'étendant essentiellement parallèlement l'une à l'autre, et un bloc hydraulique (24) fixé aux deux machines, ladite fixation assurant des connexions hydrauliques (70, 72, 76) avec lesdites machines.

9. Transmission mécanique (4) selon la revendication 8, **caractérisée en ce que** les connections hydrauliques (70, 72, 76) comprennent, pour chacune des machines hydrauliques (8, 10) au moins une connexion à haute pression (70), au moins une connexion à basse pression (72), et une barrière d'étanchéité auxiliaire (74) entourant la ou lesdites connexions à haute pression (70), ladite barrière d'étanchéité étant configurée pour canaliser une fuite éventuelle de la ou d'une des connexions à haute pression vers un drain basse pression (77).

10. Véhicule automobile comprenant :
- un moteur à combustion (3) ;
- une transmission mécanique (4) couplée audit moteur ;
- un accumulateur de pression (14) ;
**caractérisé en ce que** la transmission mécanique (4) est conforme à l'une des revendications 1 à 9, la ou les machines hydrauliques (8, 10) étant reliées hydrauliquement à l'accumulateur de pression (14).

## Patentansprüche

1. Mechanisches Getriebe (4) für Kraftfahrzeug (2), das Folgendes umfasst:
- ein Schaltgetriebe (6) mit einem Gehäuse (12) und mindestens zwei Übertragungswellen (20, 42);
- mindestens eine hydraulische Maschine (8, 10) vom Typ Pumpe oder hydraulischer Motor, die auf das Gehäuse (12) montiert ist, und mit einer Welle (20, 22), die an eine der Übertragungswellen des Schaltgetriebes gekoppelt ist;
**dadurch gekennzeichnet, dass**
mindestens ein Viertel, bevorzugt mindestens ein Drittel des axialen Ausmaßes der oder mindestens einer der hydraulischen Maschinen (8, 10) in einem Hohlraum (32, 34) des Gehäuses (12) des Schaltgetriebes aufgenommen ist.

2. Mechanisches Getriebe (4) nach Anspruch 1, **dadurch gekennzeichnet, dass** die oder jede der hydraulischen Maschinen (8, 10), die in einem Hohlraum (32, 34) des Gehäuses (12) aufgenommen ist/sind, eine oder mehrere Montageoberflächen (36) auf dem Gehäuse umfasst/umfassen, wobei die Oberfläche oder Oberflächen mit einer oder mehr äußeren Oberflächen (38) des Gehäuses außerhalb des Hohlraums in Berührung kommen.

3. Mechanisches Getriebe (4) nach Anspruch 2, **dadurch gekennzeichnet, dass** die Montageoberfläche(n) (36) der oder jeder der hydraulischen Maschinen (8, 10), die in einem Hohlraum des Gehäuses aufgenommen sind, axial auf einem zentralen Abschnitt (40) der Maschine liegen, wobei sich der Abschnitt auf mindestens einem Viertel des axialen Ausmaßes der Maschine (8, 10) erstreckt.

4. Mechanisches Getriebe (4) nach einem der Ansprüche 2 und 3, **dadurch gekennzeichnet, dass** es eine Einstellvorrichtung (46) zwischen einer der Montageoberflächen (36) der oder jeder der hydraulischen Maschinen (8, 10) und der entsprechenden Oberfläche (38) auf dem Gehäuse (12) umfasst.

5. Mechanisches Getriebe (4) nach einem der Ansprüche 1 bis 4, **dadurch gekennzeichnet, dass** es außerdem mindestens eine Hülse (52) mit zwei Nuten (54; 56) umfasst, die die Welle (20, 22) der oder mindestens einer der hydraulischen Maschinen mit der Welle, die dem Schaltgetriebe entspricht, koppeln, wobei die Nuten (58) bevorzugt ein gewölbtes Längsprofil derart aufweisen, dass eine Fluchtungsabweichung zwischen der Hülse (52) und einer der entsprechenden Wellen (20, 22) erlaubt wird.

6. Mechanisches Getriebe (4) nach Anspruch 5, **dadurch gekennzeichnet, dass** die oder mindestens eine der Hülsen (52) eine Vorrichtung (61) umfasst, die eine axiale elastische Kraft zwischen der Hülse (52) und einer der Wellen (20, 22), mit welchen die Hülse gekoppelt ist, ausübt, wobei die Kraft ein axiales Halten der Hülse (52) sicherstellt.

7. Mechanisches Getriebe (4) nach Anspruch 6, **dadurch gekennzeichnet, dass** die Vorrichtung (61), die eine axiale elastische Kraft ausübt, einen Drücker (62) und eine Feder (64) umfasst, die in einem zentralen Abschnitt der Hülse aufgenommen sind, wobei der Drücker auf einer der zwei Wellen (20, 22), mit welchen die Hülse (52) gekoppelt ist, anliegt.

8. Mechanisches Getriebe (4) nach einem der Ansprüche 1 bis 7, **dadurch gekennzeichnet, dass** es mindestens zwei hydraulische Maschinen (8, 10) umfasst, die sich im Wesentlichen parallel zueinander erstrecken, und einen hydraulischen Block (24), der an den zwei Maschinen befestigt ist, wobei die Befestigung hydraulische Verbindungen (70, 72, 76) mit den Maschinen sicherstellt.

9. Mechanisches Getriebe (4) nach Anspruch 8, **dadurch gekennzeichnet, dass** die hydraulischen Verbindungen (70, 72, 76) für jede der hydraulischen Maschinen (8, 10) mindestens eine Hochdruckverbindung (70), mindestens eine Niederdruckverbindung (72) und eine Hilfsabdichtungssperre (74), die die Hochdruckverbindung(en) (70) umgibt, umfassen, wobei die Abdichtungssperre konfiguriert ist, um ein eventuelles Leck der oder einer der Hochdruckverbindungen zu einer Niederdruckableitung (77) zu kanalisieren.

10. Kraftfahrzeug, das Folgendes umfasst:
- einen Verbrennungsmotor (3);
- ein mechanisches Getriebe (4), das mit dem Motor gekoppelt ist;
- einen Druckspeicher (14);
**dadurch gekennzeichnet, dass** das mechanische Getriebe (4) einem der Ansprüche 1 bis 9 entspricht, wobei die hydraulische(n) Maschine(n) (8, 10) hydraulisch mit dem Druckspeicher (14) verbunden sind.

## Claims

1. A mechanical transmission (4) for a motor vehicle (2), including:
- a gearbox (6) with a casing (12) and at least two transmission shafts (20, 22);
- at least one hydraulic machine (8, 10), of the pump or hydraulic motor type, mounted on the casing (12) and with a shaft (20, 22) coupled to one of the transmission shafts of the gearbox;
**characterized in that**
at least one quarter, preferably at least one third, of the axial extend of the or of at least one of the hydraulic machines (8, 10) is housed in a cavity (32, 34) of the casing (12) of the gearbox.

2. The mechanical transmission (4) according to Claim 1, **characterized in that** the or each of the hydraulic machines (8, 10) housed in a cavity (32, 34) of the casing (12) includes one or more mounting surface (36) on said casing, said surface(s) coming in contact with an exterior surface or with exterior surfaces (38) of the casing outside the cavity.

3. The mechanical transmission (4) according to Claim 2, **characterized in that** the mounting surface(s) (36) of the or of each of the hydraulic machines (8, 10) housed in a cavity of the casing are situated axially on a central portion (40) of said machine, said portion extending over less than one quarter of the axial extent of said machine (8, 10).

4. The mechanical transmission (4) according to one of Claims 2 and 3, **characterized in that** it includes an adjustment device (46) between one of the mounting surfaces (36) of the or of each of the hydraulic machines (8, 10) and the corresponding surface (38) on the casing (12).

5. The mechanical transmission (4) according to one of Claims 1 to 4, **characterized in that** it includes, in addition, at least one sleeve (52) with two fluted ends (54; 56) coupling the shaft (20, 22) of the or of at least one of the hydraulic machines to the corresponding shaft of the gearbox, the flutes (58) preferably having a rounded longitudinal profile so as to permit a misalignment between the sleeve (52) and one of the corresponding shafts (20, 22).

6. The mechanical transmission (4) according to Claim 5, **characterized in that** the or at least one of the sleeves (52) includes a device (61) exerting an axial elastic force between the sleeve (52) and one of the shafts (20, 22) to which the sleeve is coupled, said force ensuring an axial holding of the sleeve (52).

7. The mechanical transmission (4) according to Claim 6, **characterized in that** the device (61) exerting an axial elastic force includes a pusher (62) and a spring (64) which are housed in a central portion of the sleeve, the pusher resting on one of the two shafts (20, 22) to which the sleeve (52) is coupled.

8. The mechanical transmission (4) according to one of Claims 1 to 7, **characterized in that** it includes at least two hydraulic machines (8, 10) extending essentially parallel one to the other, and a hydraulic block (24) fixed to the two machines, said fixing ensuring hydraulic connections (70, 72, 76) with said machines.

9. The mechanical transmission (4) according to Claim 8, **characterized in that** the hydraulic connections (70, 72, 76) include, for each of the hydraulic machines (8, 10) at least one high pressure connection (70), at least one low pressure connection (72), and an auxiliary sealing barrier (74) surrounding the or said high pressure connection(s) (70), said sealing barrier being configured to channel any leakage from the or from one of the high pressure connections towards a low pressure drain (77).

10. A motor vehicle including:
- a combustion engine (3);
- a mechanical transmission (4) coupled to said engine;
- a pressure accumulator (14);
**characterized in that** the mechanical transmission (4) is in accordance with one of Claims 1 to 9, the hydraulic machine(s) (8, 10) being connected hydraulically to the pressure accumulator (14).
